Europäisches Patentamt

(19) European Patent Office   (11) Publication number:   **0 169 401**
Office européen des brevets                          **A2**

(12) **EUROPEAN PATENT APPLICATION**

(21) Application number: **85107945.9**   (51) Int. Cl.⁴: **H 04 N 5/30**

(22) Date of filing: **27.06.85**

(30) Priority: **27.06.84  JP  131006/84**

(43) Date of publication of application:
**29.01.86  Bulletin  86/5**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Kato, Shuzo**
**Hitachi Shumei-ryo 248-1, Hongo Mimomi-cho**
**Narashino-shi Chiba-ken(JP)**

(72) Inventor: **Takahashi, Michio**
**32-32, Minamiusuidai**
**Sakura-shi Chiba-ken(JP)**

(72) Inventor: **Kashiwaoka, Seiji**
**3-20-10, Myojin-cho**
**Hachioji-shi Tokyo(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) Apparatus for and method of detecting scanning type display picture.

(57) When a scanning type display picture (2) is imaged and
detected by a scanning type imaging device (4, 5, 6), the
detected picture is sometimes different from the original
picture. That is, a part of the original picture is missing, or a
false image not existent in the original picture appears. In the
whole detected picture, the missing part or the false image
part moves in relation to the respective periods of the two
scannings of the display image and the imaging device.
When note is taken of the phenomena of such movements, it
is possible to supplement the missing part and eliminate the
false image on the basis of a plurality of display pictures.

*FIG. 1*

EP 0 169 401 A2

## Title of the Invention

Apparatus for and Method of Detecting Scanning Type Display Picture

## Background of the Invention

The present invention relates to an apparatus and a method according to which the display picture of a scanning type display device such as CRT is satisfactorily imaged by a scanning type imaging device such as television camera.

It is common practice that characters, patterns etc. are displayed on scanning type display devices, such as CRTs, in various information equipment. When the functional test of such equipment is made, it is efficient to image and process the display frame thereof by means of a scanning type imaging device such as television camera. Besides, in order to monitor a system, the display frame is sometimes imaged by the television camera so as to transmit and display the imaged frame. When the scanning type display picture is intended to be imaged by scanning as described above, a good picture is not always detected. By way of example, a part of the actual display picture wants in the detection or a false image not included in the actual display picture is detected in some cases. It has therefore been requested to clear up such undesirable phenomena and to find the countermeasures.

## Summary of the Invention

An object of the present invention is to image a scanning type display picture effectively by scanning.

Another object of the present invention is to provide a picture detection apparatus which need not synchronize a scanning period for a display picture and a scanning period for imaging.

Still another object of the present invention is to detect an exact picture agreeing with a display picture.

Further objects of the present invention will become apparent from embodiments to be described later.

In the present invention, at least two frames are superposed to prevent the want of an image, and further, only parts common to at least two frames are left with the others removed, thereby intending to obtain a good picture.

First, as regards the superposition of frames, an expedient therefor may be one wherein the logical sum between the luminance signals of pixels at the corresponding positions of the frames is taken, or one wherein the magnitudes of the luminance signals of pixels at the corresponding positions of the frames are summed; the magnitude of a luminance signal produced by a television camera when a display device is lit up, or a value which is close to and smaller than the aforementioned magnitude is set as a threshold value; and the sum which is greater than the threshold value is recognized as an image.

Next, as regards the elimination of a false image, an expedient therefor may be one wherein the logical product between the luminance signals of pixels at the corresponding positions of frames is taken, or one wherein the luminance signals of pixels at the corresponding positions of the frames are summed; the magnitude of a luminance signal produced when a display device is lit up, or a value which is close to and smaller than the aforementioned magnitude is set as a threshold value; and the sum which is greater than the threshold value is recognized as an image.

Brief Description of the Drawings

Fig. 1 is a side view of a picture detection apparatus showing an embodiment of the present invention;

Fig. 2a is a front view showing the screen or frame of a display device to be detected, while Fig. 2b is a front view showing an example of a detected picture;

Fig. 3a is a front view exemplifying a picture which has been detected with its part wanting, while Fig. 3b is a front view exemplifying a picture which has been detected with a false image;

Fig. 4 is a timing chart for explaining the cause of the partial want of a picture;

Fig. 5 is a circuit diagram showing the arrangement of a MOS type solid-state imaging device;

Fig. 6 is a timing chart showing signals in the circuit of Fig. 5;

Fig. 7 is a timing chart showing false image signals;

Figs. 8a to 8d are diagrams each showing an imaged picture which is an input picture to picture data forming means on one side;

Figs. 9a and 9b are diagrams each showing an output picture from the picture data forming means on one side mentioned above, the picture being an input picture to picture data forming means on the other side;

Fig. 10 is a diagram showing a detected picture which corresponds to an output from the picture data forming means on the other side;

Figs. 11a and 11b are diagrams showing different pictures which replace the pictures in Figs. 9a and 9b respectively;

Fig. 12 is a diagram for explaining a horizontal scanning signal;

Fig. 13 is a diagram for explaining a television signal; and

Fig. 14 is a block diagram showing the circuits of the present embodiment.

Description of the Preferred Embodiments

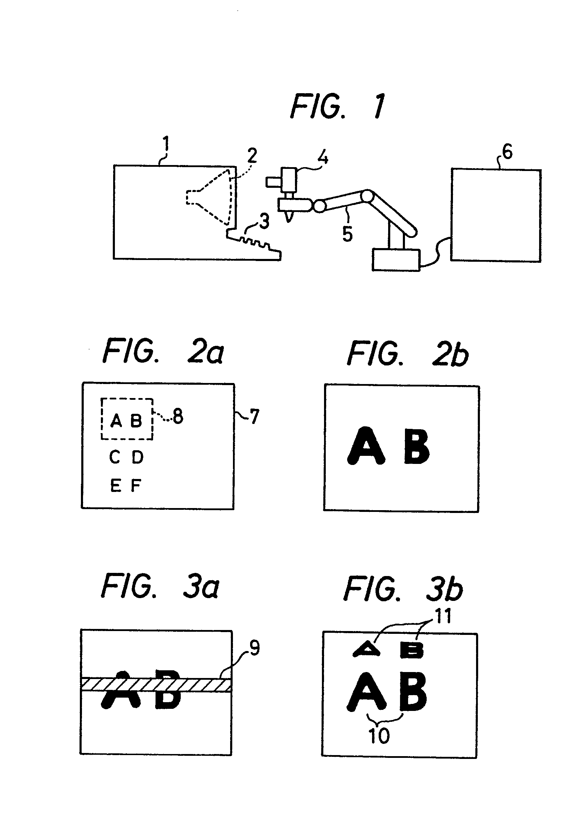

Fig. 1 shows one example of application of a picture detection apparatus. Numeral 1 designates information equipment, which has a character display device 2 and also a keyboard 3 as parts thereof. The character display device 2 is a CRT which belongs to the scanning display type. A scanning type display picture, namely, characters which appear(s) on the display screen of the character display device 2 form(s) an object to-be-inspected in this embodiment. It is assumed to be known beforehand that, when the predetermined keys of the keyboard 3 have been depressed in a predetermined sequence, the corresponding characters appear at the predetermined positions of the character display device 2. Then, the operation of the information equipment 1 can be decided accurate by the fact that the characters have actually been displayed and detected. This is a kind of product inspection. A system for such inspection is constructed of a television camera 4, a robot 5 which serves to set the television camera in front of the display screen of the display device 2, and a processor 6 which performs the control of the robot 5, as well as the inspection of characters in video information from the television camera 4, the control of the procedure of the inspection and the output of a result. It is also possible to replace the robot 5 with a mere camera
supporter. It is sometimes the case that a part of
the display screen to be inspected is enlarged and imaged.
That is, in some cases, a partial domain 8 in the whole
display screen 7 as shown in Fig. 2a is set to be imaged by the
television camera 4, and characters are enlarged and
imaged as shown in Fig. 2b, thereby to enhance the reliability
of the inspection. The robot 5 is used for moving the
screen domain 8 to-be-imaged on such occasion. When
the final functional inspection of the information equipment
1 in Fig. 1 as a finished product, and so forth are
supposed, it is desirable to avoid the trouble of deriving
video signals and synchronizing signals from within
the equipment system under display and to image the
screen by means of the independent system. In this
regard, when the display device 2 and the imaging device
4 are not synchronized, the phenomenon can take place
that a scanning line 9 lacking an image appears as shown
in Fig. 3a and that the position of the scanning line
moves. In addition, when a solid-state imaging device
is especially employed as the television camera 4, there
is also the phenomenon that a false image 11 appears
besides an original image 10 as illustrated in Fig. 3b
and that it moves.

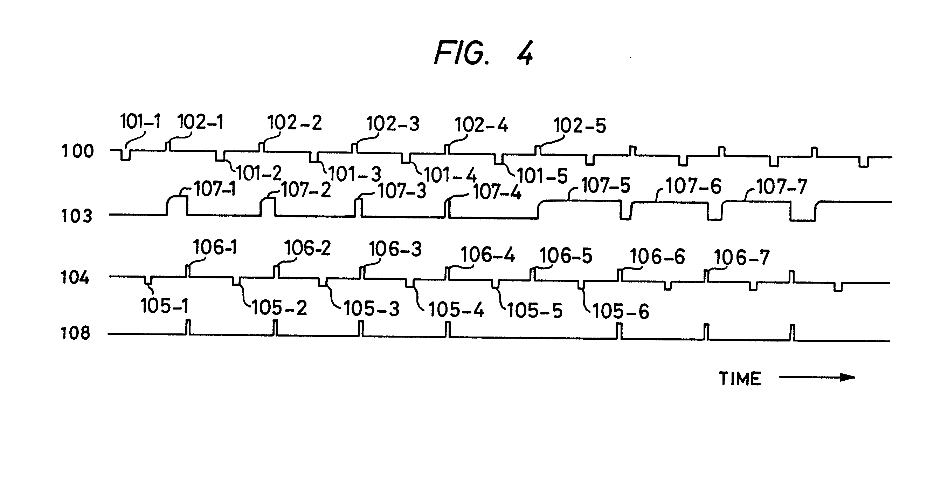

. Here, the cause of the lack of an image in a scanning line will be explained somewhat in detail with reference to Fig. 4. This figure depicts pertinent timings and signals with the axis of time taken laterally so that the time may lapse from the left toward the right. Diagram 100 illustrates vertical synchronizing signals 101 in the display device 2, and timings 102 at which the scanning of the display passes through the position of a certain specified point P that is brightly displayed on the screen. The intervals $T_p$ between the signals 101 and the timings 102 are constant, and the signals and timings arise repeatedly at respective scanning periods $T_d$. Diagram 103 illustrates the variation of the quantity of storage of charges at that point Q on the imaging device on which the aforementioned point P of the display screen is focused (the points P and Q correspond). Diagram 104 illustrates vertical synchronizing signals 105 in the imaging device 4, and timings 106 at which the scanning of the imaging passes through the point Q. When the point P is considered as spreading to the extent of the width of a scanning line, the corresponding point Q can extend over a plurality of scanning lines in the imaging device to dispersedly involve two or more scanning timings. Since, however, the same phenomenon takes place for each of the plurality of points, only one point Q shall be illustrated and elucidated in the following.

The quantity of light of phosphorescence of each point of the scanning type display device 2 rises to its peak at the moment of the impingement of a scanning beam, and it attenuates thenceforth. The time constant of the attenuation differs depending upon the kind of a phosphor used. It is various in such a manner that the quantity of light attenuates to 1/e in a short time of 5 - 10 μs in some devices for conventional television monitors, whereas it attenuates in a long time of 10 - 15 ms in some devices to be used exclusively for characters. The countermeasure of the present invention is required particularly in devices whose time constants are short. The time of 5 μs is about 1/12 of a horizontal scanning period, and is about 1/3,000 of a vertical scanning period. When an ordinary object is imaged, light enters throughout one vertical scanning time, and charges are integrated in accordance with a constant increment. In contrast, when the display device 2 of short after-glow is imaged, charges are stored in a very short time, whereupon the stored level is held until the charges are discharged for read-out. In a case where the display device 2 and the imaging device 4 perform different scannings, the holding period of time comes to change. Fig. 4 corresponds to a case where the period $T_c$ of the imaging device 4 is shorter than that $T_d$ of the display device

0169401

2. As exemplified in the figure, the holding time intervals shorten from 107-1 and in the order of 107-2, 107-3 and 107-4. When the limit is exceeded, the holding time interval conversely becomes as long as approximately one vertical scanning time as indicated at 107-5. Thenceforth, the holding time intervals shorten in the order of 107-6 and 107-7 again.

Diagram 108 extracts and illustrates the levels of the output signals of the imaging device at the times of scanning the point Q. Fundamentally the output levels are substantially equal, but an output corresponding to a scanning timing 106-5 (an output of a timing indicated by an arrow) is missing. This is attributed to the fact that the timing 102 of the phosphorescence was not existent between timings 106-4 and 106-5 (a timing 102-5 is somewhat later than the timing 106-5). For this reason, some of the scanning lines including the point Q have the output signals held at low levels, and a character pattern including the point Q is masked by a black horizontal band.

In case of the next vertical scanning, a signal output is provided at the scanning timing 106-6 of the point Q. The period of time 107 for holding the charges of the point Q shortens by a period of time $(T_d - T_c)$, which corresponds to the difference between the imaging scanning period $T_c$ and the display scanning period $T_d$, every scanning. The image of the point Q wants each time the scannings of the number of times obtained by dividing the imaging scanning period $T_c$ by this difference are performed. Such period is expressed as $T_d T_c/(T_d - T_c)$. In one frame succeeding a vertical synchronizing signal 105-5, the vicinity of the point Q wants, but . in one frame succeeding a vertical synchronizing signal 105-6, the want arises at another scanning line whose timing is still later than the scanning timing 106-6. That is, the scanning lines at which the want of the image takes place move on the screen downwards from above.

As explained above, when the scanning period $T_c$ of the imaging device 4 is shorter than that $T_d$ of the display device 2, the want occurs periodically at any point of the imaged screen.

This phenomenon signifies that parts of characters are missing when a displayed content is to be inspected by the processing of the video signals of the characters by way of example, and it is detrimental.

Next, let's consider the occurrence of a false image mentioned as the other problem. This phenomenon does not take place when the imaging device 4 employs, for example, a bulb type imaging device, in other words, a device having a uniform planar structure. It develops when a solid-state imaging device is used. The solid-state imaging device includes cells for transferring and reading out charges, besides a photodiode portion which receives light to perform photoelectric conversion. In general, the portion other than the photoelectric conversion portion is put into a structure which is shielded from light by an opaque layer. However, charges are generated by partial light having leaked and entered or by light having entered the depths of a substrate, and they mix into a vertical signal transfer portion. The quantity of the mixing appears at a fixed ratio $R$ with respect to the original charges which are to appear in the photoelectric conversion portion. As to an ordinary subject, image signals which look like thin light spreading above and below the image of a bright subject part are produced by the mixed charges. This is a property called "smear", which has not been solved yet. There is also a similar phenomenon attributed to charges which overflow to a transfer line when intense light has entered the photoelectric conversion portion. This is called "blooming", which has already been substantially solved.

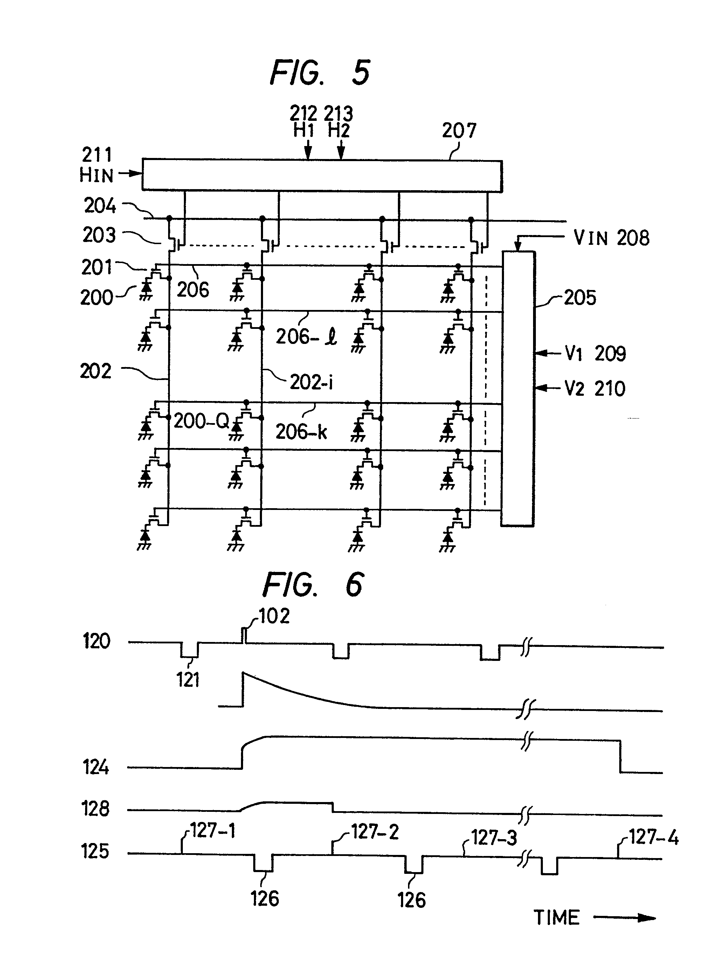

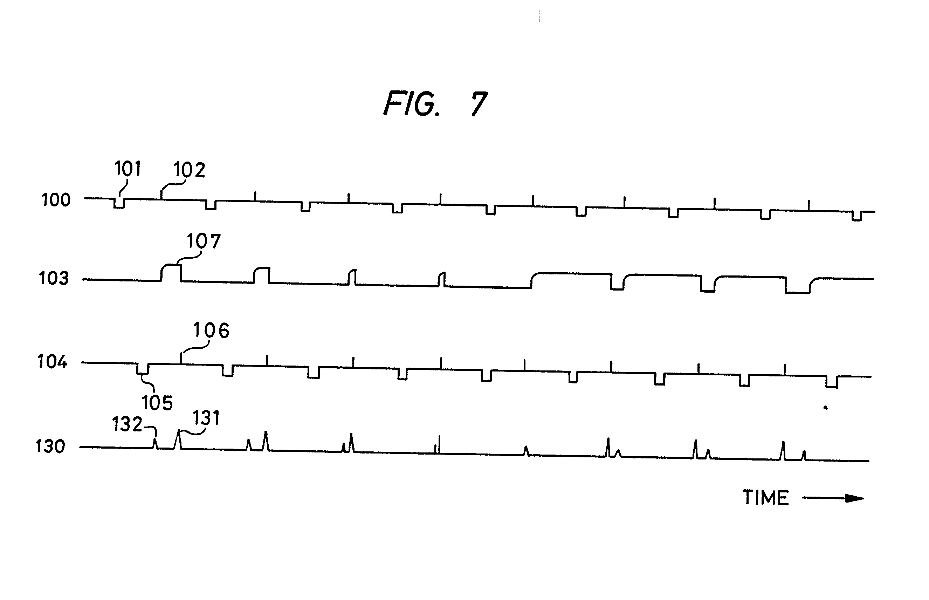

Fig. 5 exemplifies the circuit arrangement of a kind of solid-state imaging device which is called the "MOS type".

- 12 -

0169401

Numeral 200 in the figure designates a photoelectric conversion photodiode, and the photodiodes are arranged in two dimensions. The photodiode 200 is connected to a vertical wiring line 202 through a MOS gate 201, and is further connected to a read-out line 204 through a MOS gate 203. The MOS gates 201 are driven and enabled through a horizontal wiring line 206 by a vertical shift register 205 every scanning line. The MOS gate 203, which corresponds to one vertical aluminum lead, is driven and enabled by a horizontal register 207. The signal of the cell thus selected in both the vertical and horizontal directions is delivered to the line 204. The vertical register 205 has a signal of "1" set at its upper end by a $V_{IN}$ input 208 at the beginning of vertical scanning. Thereafter, it shifts the signal of "1" by one stage per scanning line by the use of two-phase clocks V1-209 and V2-210. The horizontal scanning leads 202 have "1" set at their left end by an $H_{IN}$ signal 211 at the beginning of each horizontal scanning, and they shift the signal of "1" every stage by the use of two-phase clocks H1-212 and H2-213.

Now, symbol 200-Q is assumed to indicate the photodiode of the point Q corresponding to the position on which the bright spot P of the display device 2 is focused. The vertical wiring line connected to the diode 200-Q

- 13 -

0169401

is denoted by symbol 202-i, and the horizontal wiring line by symbol 206-k.

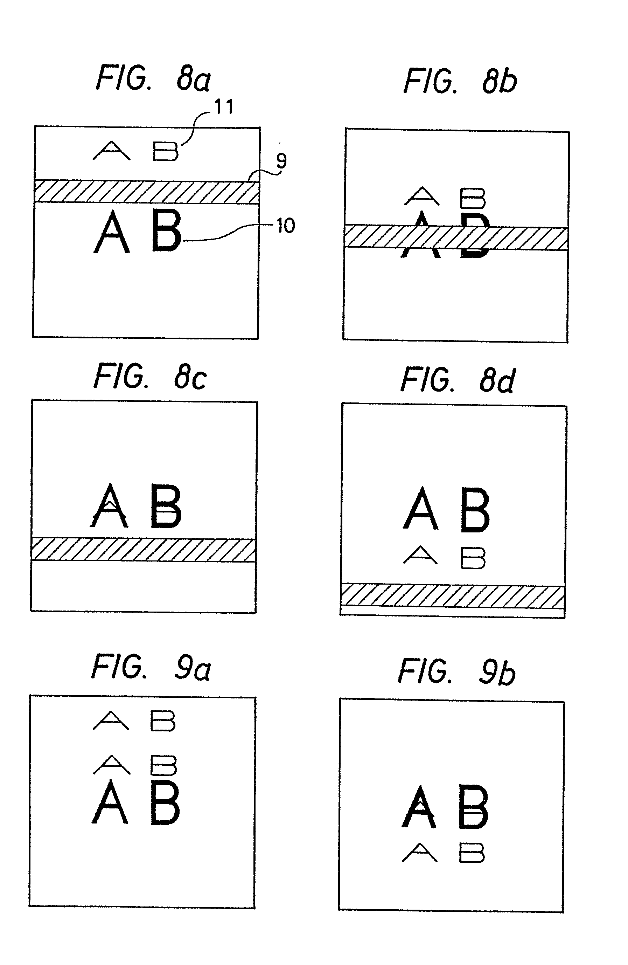

Fig. 6 is a timing chart for explaining the occurrence of a false image. Diagram 120 illustrates the timings 121 of the horizontal synchronizing signals of the display device 2 and the scanning timing 102 of the point P. Diagram 123 illustrates the variation of the intensity of phosphorescence of the point P, and diagram 124 the variation of the charges of the cell of the diode 200-Q. The charges are integrated in a short time since the timing 102. Diagram 125 illustrates the timings 126 of the horizontal synchronizing signals of the imaging device 4, and the timings 127 at which the vertical wiring line 202-i is read out. The timing 127-4 is the read-out timing of the cell of the diode 200-Q, and the charges shown in the diagram 124 are released at this time.

When light has fallen on the diode 200-Q, some of charges generated by light incidence nearby flow into the vertical wiring line 202-i. Diagram 128 illustrates the variation of the charges generated in the wiring line 202-i by this cause.

The charges in the diagram 128 are stored since the timing 102 until they reach 1/R of the quantity of the original charges in the diagram 124. At the first succeeding read-out timing 127-2 of the wiring line 202-i, the stored charges are read out.

When a plurality of (S) cells of the imaging device 4 correspond to the point P as stated before, an area to be struck by light enlarges to that extent, and the quantity of the charges in the diagram 128 increases to become S/R. Assuming that the horizontal wiring line driven on this occasion be 206-$l$ unlike 206-k, the signal in the diagram 128 is added to the signal of a cell located at the intersection point between the lines 206-$l$ and 202-i, and the resulting sum is read out. If the cell concerned corresponds to the part of the display device 2 which does not phosphoresce, a pseudo signal will appear in spite of the fact that the read-out signal ought to have a low level. Since the original focusing point and the point where the false image develops share the vertical wiring line 202, their horizontal coordinates on the screen are the same. Regarding the vertical direction, the horizontal scanning of the display device 2 is followed with a lag within one horizontal scanning. That is, the interval of the timings 102 and 127 is within the horizontal scanning period. Accordingly, the vertical width, namely, the number of scanning lines of a pattern such as character in the display device 2 is equal to the number of scanning lines of the false image in the imaging device 4. When the number of scanning lines of the original image has increased, the lateral width of the false image 11 is equal to that of the true image 10 and is greater than on the display device as illustrated in Fig. 3b, but the vertical width thereof consists of the same number of scanning lines as on the display device. Consequently, the false image becomes laterally long.

Fig. 7 has the signals of the false image added to the timing chart of Fig. 4. Diagrams 100 - 104 are the same as in Fig. 4. Diagram 130 illustrates the output signals of the original image of the point Q and the false image. The signal 132 of the false image lies within one horizontal scanning after the scanning timing 102 of the display device, and its position relative to the signal 131 of the true image shifts at a fixed pitch every vertical scanning. That is, the false image moves downwards from above on the screen. This false image is seen and becomes a cause for diverting attention when a person observes the picture on a monitor, and it forms noise when the imaged frame is automatically processed. Particularly when the false image has overlapped the original image, the deformation of the pattern occurs to impede an exact inspection or decision.

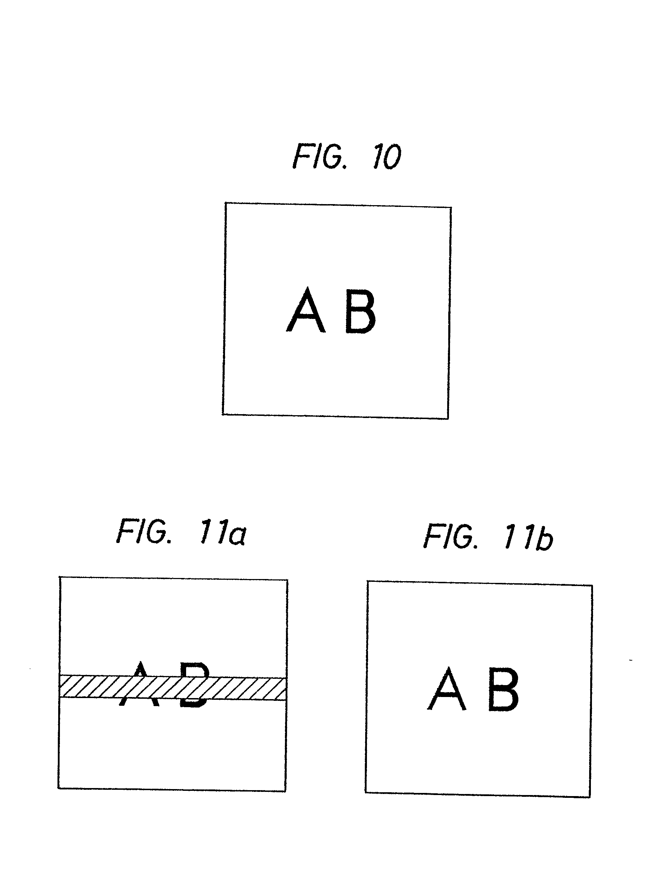

Figs. 8a, 8b, 8c and 8d depict four successive frames imaged by the television camera 4. As stated before, the true image 10 is displayed at a fixed position, whereas the scanning line 9 involving the want and also the false image 11 are moving. First, a logical sum taken between the frames of Figs. 8a and 8b results in Fig. 9a, and a logical sum taken between the frames of Figs. 8c and 8d results in Fig. 9b, so that the want of the image is prevented. Subsequently, when the logical product between the frames of Figs. 9a and 9b is taken, it becomes as shown in Fig. 10, and only the true image 10 free from the false image can be extracted without any want. Regarding the sequence of logical operations, only the true image 10 similar to the illustration of Fig. 10 may well be extracted in such a way that an image in Fig. 11a and an imge in Fig. 11b are respectively obtained by taking the logical product between the frames of Figs. 8a and 8b and by taking the logical product between the frames of Figs. 8c and 8d, to eliminate the false image, whereupon the logical sum between the images of Figs. 11a and 11b is taken. Further, the sequence of the frames for logical operations may be at will. For example, the same effect is obtained when the respective logical sums between the frames of Figs. 8a and 8c and between those of Figs. 8b and 8d are subjected to a logical product. Still further, frames need not be sampled in the successive four periods, but they may well be sampled in such a jumping way that the second frame is sampled several periods later than the sampling of the first frame. However, the moving speeds of the image want and the false image on the respective scanned frames of the television camera 4 depend upon the difference between the scanning period $T_d$ of the display device and the scanning period $T_c$ of the television camera 4. Therefore, the moving speeds are low when the values of both the periods are close, whereas they are high when the values are widely different. In the case of executing logical operations between frames, it is more desirable that when the logical sum is taken for preventing the want of an image, parts lacking in images do not overlap between the two frames, and the same applies to the elimination of a false image. Therefore, the sampling periods of the frames should desirably be properly set so as to avoid the overlapping parts.

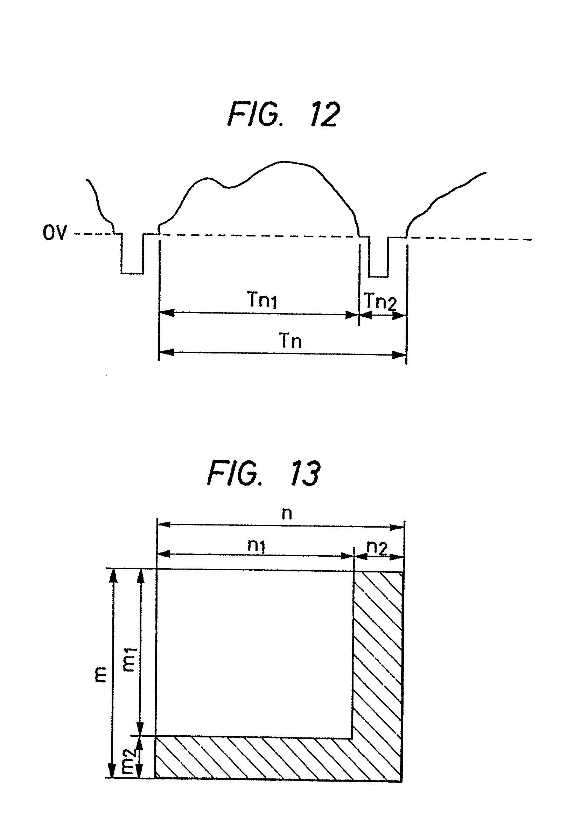

Now, the present invention will be described more concretely with reference to Figs. 12, 13 and 14. It is assumed here that the number of frames to be sampled be four and that the luminance signal of a television camera be binary-coded by a binary-coding circuit and then stored in an image memory.

Fig. 12 is a diagram for explaining a horizontal scanning signal. Fig. 13 is a diagram for explaining a television signal in correspondence with a television frame. The horizontal scanning signal is divided into a video signal period $T_{n1}$ and a horizontal blanking period $T_{n2}$. Integers with these periods $T_{n1}$ and $T_{n2}$ divided by a period $T_a$ corresponding to one pixel of the television camera ($T_{n1}$ and $T_{n2}$ are set beforehand so as to become integral times of $T_a$) become n1 and n2 in the television frame of Fig. 13, respectively.

Next, integers obtained when the period $T_{m1}$ of the frame in which a video signal is included in a vertical scanning signal and the vertical blanking period $T_{m2}$ in which the signal is not included are divided by $T_a$ become m1 and m2 in the frame of Fig. 13, respectively.

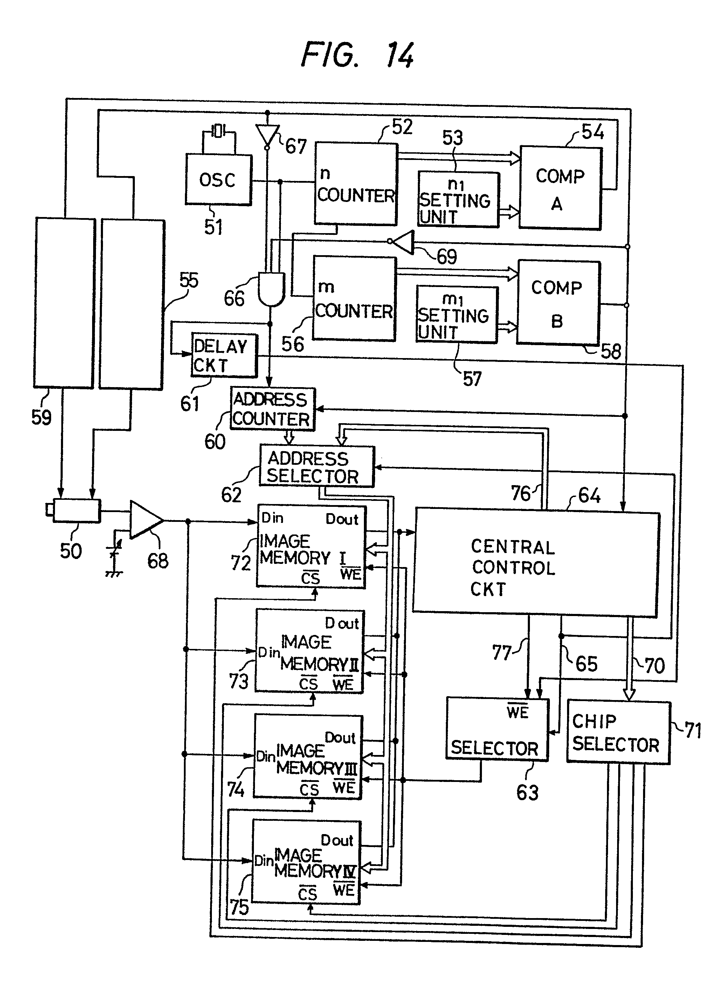

Fig. 14 is a diagram of blocks which constitute an embodiment. First, there will be explained how to apply horizontal and vertical synchronizing signals to a television camera 50 and how to afford addresses to image memories I, II, III and IV in a writing mode.

In order to generate the horizontal synchronizing signal, clock pulses at an oscillation frequency $f_a$ ($= 1/T_a$) from a clock oscillator circuit 51, one period of which is the time $T_a$ corresponding to one pixel of the television camera, are integrated by an n-ary counter 52 which counts the lapse of a horizontal scanning time.

Next, the horizontal synchronizing signal is to be supplied to the television camera after lapse of that video signal period in the horizontal scanning time which corresponds to nl in terms of the count number of the n-ary counter 52. To this end, the count number of the n-ary counter 52 and the value of an nl setting unit 53, set by a digital switch by way of example, are compared by a comparator circuit A 54, and a signal "1" is provided from the comparator circuit A 54 while a relation of $n > nl$ holds, namely, until the value of the n-ary counter 52 becomes $\underline{n}$ in excess of nl. This output is applied to a horizontal synchronizing signal generator circuit 55 so as to generate the horizontal synchronizing signal in the television camera 50.

As regards the vertical synchronizing signal, an m-ary counter 56 counts up by one after the value of the n-ary counter 52 has lapsed by $\underline{n}$. The fact that all the horizontal scanning signals constituting the video portion of the frame have ended, i. e., that the value of the m-ary counter 56 has become ml is known as follows. The value of the m-ary counter 56 and the value of an ml setting unit 57, set by a digital switch by way of example, are compared by a comparator circuit B 58, and a signal "1" is provided from the comparator circuit B while a relation of $m > ml$ holds, namely, until the value of the m-ary counter becomes $\underline{m}$ in excess

of m1.  This output is applied to a vertical sychronizing signal generator circuit 59 so as to generate the vertical synchronizing signal in the television camera 50.

The method of affording addresses in the writing mode of the image memories I, II, III and IV is as follows.

In this case, in order to select the output of an address counter 60 and the output of a delay circuit 61 so as to effect the writing into the image memories I, II, III and IV, a predetermined control signal 65 of either "1" or "0" is applied from a central control circuit 64 to an address selector 62 as well as a $\overline{\text{WE}}$ selector 63.

First, the address counter 60 preparing an address is cleared at the time of the fall of the pulse which the comparator circuit B 58 provides for m > ml.

Next, in order to impress an input pulse on the address counter 60 for only the video signal portion of the horizontal scanning signal, an AND circuit 66 is supplied as its inputs with the clock pulse produced from the clock oscillator circuit 51, a signal obtained by inverting the output of the comparator circuit A 54 by means of a NOT circuit 67, and a signal obtained by inverting the output of the comparator circuit B 58 by means of a NOT circuit 69, and it takes the logical product of the three inputs in total.  The output pulse of the AND circuit 66 is applied to the address counter 60 so as to count it.

The output signal of the television camera 50 is binary-coded by a binary-coding circuit 68, the output of which is connected to the data inputs ($D_{in}$) of the image memories I, II, III and IV. An input as to whether or not the data inputs are written into the image memories I, II, III and IV is a write enable signal (hereinbelow, abbreviated to "$\overline{WE}$"), and the data inputs can be written when the $\overline{WE}$ is "0", whereas a write inhibit state is established when the $\overline{WE}$ is "1". The output pulse of the AND circuit 66 is passed through the delay circuit 61 in order to form a timing at which the data inputs can be properly written.

When the output pulse of the comparator circuit B 58 has become "1", the central control circuit 64 recognizes that the output operation of the video signals of the current frame has ended, and it supplies the control signal 65 so as to make the output of the address counter 60 that of the address selector 62 and to make the output of the delay circuit 61 that of the $\overline{WE}$ selector 63.

In order to receive the data of the first frame, the central control circuit 64 applies a control signal 70 to a chip selector 71 so as to select the image memory I 72. In addition, the central control circuit 64 applies the control signal 70 to the chip selector 71 so as to select the image memory II 73 for the second frame, the image memory III 74 for the third frame and the image memory IV 75 for the fourth frame. Thus, the images in Figs. 8a, 8b, 8c and 8d are respectively stored in the image memories I, II, III and IV.

Next, in order to read out the image memories, the central control circuit 64 applies the control signal 65 to the address selector 62 so as to select an address signal 76 and further applies it to the $\overline{\text{WE}}$ selector 63 so as to select a write enable signal 77 delivered from this central control circuit 64.

Subsequently, the data of the image memory I 72 and the image memory II 73 are successively read out and are subjected to their logical sum, and the result is stored in the image memory I 72. Thereafter, the data of the image memory III 74 and the image memory IV 75 are successively read out and are subjected to their logical sum, and the result is stored in the image memory III 74. At the next step, the data of the image memory I 72 and the image memory III 74 are successively read out and are subjected to their logical product, and the result is stored in the image memory I 72. Thus, the picture in Fig. 10 is obtained.

- 1 -

0169401

Claims

1. An apparatus for detecting a scanning type display picture comprising means (4; 50) to image the scanning type display picture by scanning, means (72-75) to store imaged picture data, means (64) to superpose a pair of picture data so as to form one new picture data, means (64) to extract coincident parts of a pair of picture data from both the picture data so as to form one new picture data, means (68) to put the imaged picture data into the input picture data of one of the picture data forming means, and means (63, 64, 71) to put the picture data formed by said one picture data forming means, into the input picture data of the other picture data forming means.

2. An apparatus for detecting a scanning type display picture as defined in Claim 1, wherein a scanning period of the imaging means is set to be shorter than that of the scanning type display picture.

3. An apparatus for detecting a scanning type display picture as defined in Claim 1, wherein the picture data are of a type of binary-coded data.

4. An apparatus for detecting a scanning type display picture as defined in Claim 1, wherein said picture data forming means (64) comprise means to operate a logical sum between a pair of picture data .so as to form one new picture data, and means to operate a logical product between a pair of picture data so as to form one new picture data.

5. An apparatus for detecting a scanning type display picture as defined in Claim 4, wherein the output picture data of the picture data forming means to operate the logical sum is put into the input picture data of the picture data forming means to operate the logical product.

6. An apparatus for detecting a scanning type display picture as defined in Claim 4, wherein the output picture data of the picture data forming means to operate the logical product is put into the input picture data of the picture data forming means to operate the logical sum.

7. A method of detecting a scanned picture comprising imaging the scanning type display picture by scanning, storing picture data of four pictures which have been imaged at different times, superposing the picture data of two of the four pictures so as to form one new picture data, superposing the picture data of the remaining two of the four pictures so as to form another new picture data, and extracting coincident parts of a pair of picture data formed by the above steps, from both the picture data so as to form a different new picture data.

0169401

## FIG. 1

## FIG. 2a

## FIG. 2b

## FIG. 3a

## FIG. 3b

FIG. 4

TIME ⟶

2/8

0169401

0169401

## FIG. 5

212 213
H1 H2          207

211
HIN

204
203                                      VIN 208

201
200            206

206-ℓ

202            202-i

200-Q          206-k

205

V1 209

V2 210

## FIG. 6

120          102

121

124

128

125    127-1        127-2        127-3        127-4

126          126

TIME →

FIG. 7

0169401

FIG. 8a

FIG. 8b

FIG. 8c

FIG. 8d

FIG. 9a

FIG. 9b

6/8

0169401

FIG. 10

A B

FIG. 11a

A B

FIG. 11b

A B

0169401

## FIG. 12

## FIG. 13

0169401

# FIG. 14